# EUROPÄISCHE PATENTSCHRIFT

(11) **EP 3 465 533 B1**
(45) Veröffentlichungstag und Bekanntmachung des Hinweises auf die Patenterteilung: **17.07.2019**
(21) Anmeldenummer: 17724825.9
(22) Anmeldetag: 22.05.2017
(51) Int. Cl.: G06K 9/00, F21S 41/135

(54) **LINEAR POLARISIERTE LICHTABSTRAHLUNG DURCH EINEN FAHRZEUGSCHEINWERFER ZUM EINSATZ IN EINEM KAMERABASIERTEN FAHRERASSISTENZSYSTEM**
LINEARLY POLARIZED LIGHT EMISSION BY A VEHICLE HEADLIGHT, FOR USE IN A CAMERA-BASED DRIVER ASSISTANCE SYSTEM
ÉMISSION D'UN RAYONNEMENT LUMINEUX POLARISÉ LINÉAIREMENT PAR UN PROJECTEUR DE VÉHICULE, POUR UTILISATION DANS UN SYSTÈME D'AIDE À LA CONDUITE BASÉ SUR UNE CAMÉRA

(30) Priorität: 24.05.2016 DE 102016006326
(43) Veröffentlichungstag der Anmeldung: 10.04.2019
(73) Patentinhaber: Audi AG, 85045 Ingolstadt (DE)
(72) Erfinder: NEUKAM, Johannes, 91257 Pegnitz (DE); ANSORG, Philipp, 85051 Ingolstadt (DE)
(86) Internationale Anmeldenummer: PCT/EP2017/062268
(87) Internationale Veröffentlichungsnummer: WO 2017/202769

(56) Entgegenhaltungen:
- EP-A2- 1 351 015
- WO-A1-2015/063512
- DE-A1-102012 018 121
- DE-A1-102013 207 148
- US-B1- 6 465 787

## Beschreibung

Die Erfindung betrifft ein Fahrerassistenzsystem für ein Kraftfahrzeug gemäß dem Oberbegriff des Patentanspruchs 1. Überdies betrifft die Erfindung ein Kraftfahrzeug mit einem derartigen Fahrerassistenzsystem. Weiterhin betrifft die Erfindung ein Verfahren zum Betreiben eines Fahrerassistenzsystems für ein Kraftfahrzeug gemäß dem Oberbegriff des Patentanspruchs 15.

In modernen Kraftfahrzeugen, wozu insbesondere Kraftfahrzeuge mit Verbrennungsmotor und/oder Elektromotor zählen, spielt die Erkennung der Umgebung durch computerbasierte Assistenzsysteme eine zunehmend wichtigere Rolle. Als Grundlage für die Erstellung eines dreidimensionalen virtuellen Modells der realen Umgebung werden Sensordaten unterschiedlichster Art ausgewertet. Hierzu zählen neben GPS-, Infrarot- und Ultraschallsensoren vor allem Bilddaten, welche von einer üblicherweise als 2D-Kamera vorliegenden Bilderfassungseinheit werden, die eine Abtastung im sichtbaren Wellenlängenbereich vornimmt. Insbesondere in Fahrtrichtung ausgerichtete Kamerasysteme profitieren hierbei von der verbesserten Ausleuchtung durch die vorhandenen Scheinwerfersysteme des Kraftfahrzeugs. Das sichtbare Lichtspektrum des Scheinwerfers erhöht bei klarer Sicht die Genauigkeit der Kameraerfassung, vermindert bei Nebel und ähnlich schlechten Sichtverhältnissen jedoch die Qualität der Aufnahmen, da die Partikel in der Luft das ausgesendete Licht reflektieren und somit das Bild verschlechtern.

Nach derzeitigem Stand erfolgt die Ausleuchtung des Kamerasichtfelds größtenteils durch die Scheinwerfer des Kraftfahrzeugs. Hierbei wird große Sorgfalt darauf verwendet, die Blendung des Autofahrers im Fall von Nebel zu minimieren. Da die hohe Lichtintensität des Fernlichts am Nebel zu Reflexionen führt, stellen moderne Kraftfahrzeuge einen zusätzlichen Nebelscheinwerfer zur Verfügung, dessen Funktion darauf optimiert ist, die Fahrbahn auszuleuchten, ohne den Fahrer zu blenden. Hierzu wird ein Bereich der Fahrbahn ausgeleuchtet, der nicht notwendigerweise von verbauten Kamerasystemen ausgewertet wird. Dabei begegnen diese Fahrerassistenzsysteme den gleichen Problemen, denen auch ein menschlicher Fahrer gegenübersteht, nämlich einer signifikanten Sichtverschlechterung bei Nebel.

Eine programmgesteuerte Recheneinheit, beispielsweise ein Mikrokontroller oder ein Mikroprozessor, berechnet aus den Eingabedaten der Sensoren die Umgebung des Kraftfahrzeugs. Reflexionen an einer nassen Fahrbahn, an spiegelnden Gebäuden und Oberflächen wie beispielsweise Heckscheiben von anderen Kraftfahrzeugen erhöhen das Rauschen in den Eingangsdaten der Kamera. Ein vormals eindeutig identifizierbares Objekt kann durch die Überlagerung mit Reflexionen für einen mittels eines Rechenprogramms implementierten Computeralgorithmus schwierig zu erkennen sein. Dieses Rauschen verzerrt das Signal des Bildes und führt einen Unsicherheitsfaktor ein. Nebel und Wasserdampf in mittlerer bis ferner Distanz (30 Meter bis 500 Meter) lassen die Konturen von Objekten verschwimmen. Dies erschwert die Aufgabe des Fahrerassistenzsystems, Muster zu erkennen. Das Verhältnis von Signal zu Rauschen verschlechtert sich, insbesondere mit zunehmender Entfernung.

In diesem Zusammenhang ist aus der DE 10 2012 018 121 A1 eine Bilderfassungsvorrichtung zum Erfassen von Bildern einer Umgebung eines Kraftwagens bekannt, mit einer Stereokamera-Einheit, welche eine erste Optikeinrichtung zum Erfassen von Bildern der Umgebung und eine in einem Abstand zu der ersten Optikeinrichtung angeordnete, zweite Optikeinrichtung zum Erfassen von Bildern der Umgebung umfasst, wobei einer der Optikeinrichtungen zumindest ein Polarisationsfilterelement zum zumindest teilweise Absorbieren von Licht zugeordnet ist, welches zwischen wenigstens einer Gebrauchsstellung, in der das Polarisationsfilterelement zumindest teilweise in einem Erfassungsbereich der wenigstens einen Optikeinrichtung angeordnet ist, und einer Nichtgebrauchsstellung, in der das Polarisationsfilterelement außerhalb des Erfassungsbereichs der wenigstens einen Optikeinrichtung angeordnet ist, verstellbar ist.

Überdies ist aus der DE 10 2014 205 204 B3 ein kamerabasiertes Fahrerassistenzsystem mit einer einen ersten und zweiten Bildsensor aufweisenden Stereokamera zur Erzeugung von Bilddaten der Fahrzeugumgebung bekannt, bei welchem die Bilddaten von einer Bildauswerteeinheit ausgewertet werden und dem zweiten Bildsensor ein Polarisationsfilter vorgeschaltet ist, welcher horizontal polarisiertes Licht transmittieren lässt, wobei die Bildauswerteeinheit ausgebildet ist, die Intensitäten der gleichzeitigt von dem ersten und zweiten Bildsensor erzeugten Frames von Bilddaten zu vergleichen und in Abhängigkeit des Verhältnisses der Intensitäten den Oberflächenzustand der von der Stereokamera aufgenommenen Fahrbahn anzuzeigen.

Aus dem weiteren Umfeld wird von der DE 10 2013 207 148 A1 ein Lichtlaufzeitkamerasystem vorgeschlagen umfassend eine Lichtlaufzeitkamera, welche für den Empfang einer bevorzugten Lichtpolarisation ausgebildet ist, sowie eine Beleuchtung, welche für eine Abstrahlung eines polarisierten Lichts ausgebildet ist.

Ein weiteres relevantes Dokument ist WO2015/063512.

Es ist daher Aufgabe der vorliegenden Erfindung, ein kamerabasiertes Fahrerassistenzsystem sowie ein Kraftfahrzeug mit einem derartigen Fahrerassistenzsystem sowie ein entsprechendes Verfahren vorzuschlagen, mit welchem die Genauigkeit der Bilderfassungseinheit erhöht werden kann.

Diese Aufgabe wird gelöst durch ein Fahrerassistenzsystem mit den Merkmalen des Patentanspruchs 1, ein Kraftfahrzeug mit den Merkmalen des Patentanspruchs 13 sowie durch ein Verfahren mit den Merkmalen des Patentanspruchs 15. Vorteilhafte Weiterbildungen der vorliegenden Erfindung sind Gegenstand der abhängigen Ansprüche.

Die Erfindung geht aus von einem Fahrerassistenzsystem für ein Kraftfahrzeug, wobei das Fahrerassistenzsystem einen Fahrzeugscheinwerfer, welcher dazu ausgelegt ist, eine Umgebung des Kraftfahrzeugs zu beleuchten, und eine Bilderfassungseinheit umfasst, welche dazu ausgelegt ist, im Wesentlichen nur Licht in einer vorgebbaren ersten Polarisationsrichtung zur Erzeugung von Bilddaten in Abhängigkeit von der Umgebung des Kraftfahrzeugs auszuwerten.

Erfindungsgemäß wird das Fahrerassistenzsystem dadurch weitergebildet, dass der Fahrzeugscheinwerfer dazu ausgelegt ist, während eines bestimmungsgemäßen Betriebs, bei welchem eine vorgebbare Lichtleistung durch den Fahrzeugscheinwerfer bereitgestellt wird, gemäß einem vorgebbaren Pulsmuster und/oder mit einem vorgebbaren Anteil an der Lichtleistung linear polarisiertes Licht mit einer zweiten Polarisationsrichtung zur Beleuchtung der Umgebung bereitzustellen. Unter Lichtleistung wird insbesondere der durch den Fahrzeugscheinwerfer bereitgestellte Lichtstrom verstanden. Bei Bezug auf einen Raumwinkel kann auch die Lichtstärke als Bezugsgröße dienen. Wenn die Hellempfindlichkeitskurve V(A) (auch relativer spektraler Hellempfindlichkeitsgrad genannt) unberücksichtigt bleiben soll, kann stattdessen die Strahlungsleistung des ausgesandten Lichts als Bezugsgröße zugrundegelegt werden. Da durch die Verwendung eines Polarisationsfilters die spektrale Zusammensetzung des gefilterten, das heißt polarisierten, Lichts nicht verändert wird, ist eine Differenzierung zwischen Lichtstrom einerseits und Strahlungsleistung andererseits an dieser Stelle nicht erforderlich.

Das Pulsmuster kann einen periodischen Verlauf aufweisen, insbesondere mit einer vorgebbaren Einschaltdauer und einer vorgebbaren Ausschaltdauer. Die Bereitstellung des linear polarisierten Lichts erfolgt dabei während der jeweiligen Einschaltdauer, wobei während der verbleibenden Zeit, also der jeweiligen Ausschaltdauer, zumindest ein Teil der vorgebbaren Lichtleistung durch nicht polarisiertes Licht bereitgestellt wird. Das Verhältnis von Einschaltdauer zu der Summe von Einschaltdauer und Ausschaltdauer wird als Tastgrad (englisch: duty cycle) bezeichnet. Der Tastgrad ist bevorzugt größer 0 Prozent und insbesondere kleiner 100 Prozent. Der vorgebbare Anteil an der Lichtleistung, welcher durch das linear polarisierte Licht gestellt wird, ist bevorzugt größer 0 Prozent. Unabhängig von der unteren Grenze des vorgebbaren Anteils an der Lichtleistung ist der vorgebbare Anteil an der Lichtleistung kleiner gleich 100 Prozent. Alternativ kann vorgesehen sein, dass der vorgebbare Anteil an der Lichtleistung kleiner als 100 Prozent ist.

Bei dem Fahrzeugscheinwerfer handelt es sich bevorzugt um eine im Wesentlichen in Fahrtrichtung abstrahlende vorschriftsmäßige Beleuchtungseinrichtung, welche insbesondere im sichtbaren Wellenlängenbereich Licht abstrahlt. Das spektrale Zusammensetzen des abgestrahlten Lichts ergibt insbesondere weißes Licht. Alternativ kann der Fahrzeugscheinwerfer dazu ausgelegt sein, hauptsächlich in einem gelben Spektralbereich abzustrahlen.

Der Erfindung liegt die Erkenntnis zugrunde, dass bei Nebel oder Wasserdampf in der Atmosphäre an den fein verteilten Wassertröpfchen Reflexionen auftreten, welche tendenziell zu einer Drehung der Polarisationsebene des reflektierten Lichts gegenüber dem abgestrahlten Licht führen. Dieser Effekt kann besonders vorteilhaft dadurch ausgenutzt werden, dass gemäß der Erfindung linear polarisiertes Licht durch den Fahrzeugscheinwerfer abgestrahlt wird und das reflektierte Licht von einer Bilderfassungseinheit, welche ebenfalls mit einem vorgeschalteten linearen Polarisationsfilter ausgestattet ist, ausgewertet wird. Hierdurch kann das Rauschen in dem Bildsignal reduziert werden, wodurch sich das Verhältnis von Signal zu Rauschen verbessert. Die Verringerung des Rauschens aus Bildaufnahmen durch die Bilderfassungseinheit (Kamera) minimiert die Fehleranfälligkeit der Umgebungsdaten, die an das Kraftfahrzeug geliefert werden. Insbesondere im Hinblick auf autonom fahrende Kraftfahrzeuge bietet dies einen eindeutigen Sicherheitsgewinn. Die verbesserte Abbildung der Umgebung verhindert eine Fehlinterpretation der Umgebung durch einen Auswertealgorithmus, welcher in einer Rechnereinheit des Fahrerassistenzsystems abgearbeitet wird. Bisher kann es durch fehlerhafte Mustererkennung zu derartigen Fehlinterpretationen kommen, welche beispielsweise durch Blendungen, Spiegelungen und/oder Trübungen hervorgerufen werden. Mithilfe der Erfindung wird die durch das Fahrerassistenzsystem gewonnene Sicht des Fahrzeugs bei Nebel und Wasserdampf in der Atmosphäre verbessert.

Ein weiterer Vorteil der erfindungsgemäßen Lösung liegt darin, dass bestehende Komponenten des Kraftfahrzeugs weiterverwendet werden können. Lediglich der Einbau von Polarisationsfiltern in den Strahlengang vor die bestehenden Komponenten, das heißt Fahrzeugscheinwerfer und Bilderfassungseinheit (Kamera), ist für eine Umrüstung notwendig. Der Fahrzeugscheinwerfer hält somit eine weitere Funktion, die über die Beleuchtung des Fahrbahnumfelds zu dem Zweck, dass eine Erkennbarkeit des Fahrbahnumfelds durch einen Menschen in der Person des Fahrers des Kraftfahrzeugs ermöglicht wird, hinausgeht. Durch die Bereitstellung der zusätzlichen Information des erfindungsgemäßen Aufbaus, welcher in Form von linear polarisiertem Licht mit einer vorgegebenen Polarisationsrichtung bereitgestellt wird, erhöht sich die Genauigkeit der Bilderfassungseinheit. Indem das Rauschen reduziert wird, wird somit das Signal, welches durch die Bilderfassungseinheit erzeugt wird, genauer. Auf der Basis dieser genaueren Bilddaten können Bildverarbeitungsalgorithmen eine zuverlässigere Modellbildung der Umgebung vornehmen.

Gemäß einer vorteilhaften Weiterbildung des Fahrerassistenzsystems ist die zweite Polarisationsrichtung gleich der ersten Polarisationsrichtung. Hierdurch wird der vorteilhafte Effekt erzielt, dass beispielsweise von einer metallischen Oberfläche - beispielsweise einem Straßenschild oder einem vorausfahrenden oder entgegenkommenden Kraftfahrzeug - reflektiertes Licht mit der gleichen Polarisationsrichtung bei der Bilderfassungseinheit eintrifft, in der es durch den Kraftfahrzeugscheinwerfer ausgesendet wurde. Im Unterschied dazu wird an in der Atmosphäre vorhandenen Wassertröpfchen die Polarisationsrichtung tendenziell gedreht, sodass das an diesen Tröpfchen reflektierte Licht, welches zu der Bilderfassungseinheit zurückgestrahlt wird, nur noch zu einem reduzierten Teil in die Erzeugung der Bilddaten eingeht, nämlich mit einem Faktor, welcher durch den Cosinus des Winkels, um welchen die Polarisationsrichtung gegenüber der ersten und zweiten Polarisationsrichtung gedreht wurde, gegeben ist. Bei einer Drehung der Polarisationsrichtung um 90 Grad erfolgt sogar eine totale Unterdrückung des Störsignals.

Gemäß einer bevorzugten Ausführungsform des Fahrerassistenzsystems weist die Bilderfassungseinheit eine Auflösung von zumindest VGA-Auflösung mit mindestens 640x480 Bildpunkten auf. Zunehmend bevorzugt in der nachfolgend genannten Reihenfolge ist ferner eine Auflösung mit mindestens 768x576 Bildpunkten (PAL-D); mindestens 800x600 Bildpunkten (SVGA); mindestens 1280x720 (HD720 High Definition "HD Ready"); mindestens 1920x1080 (HD180 High Definition "Full HD"). Durch eine hohe Auflösung der Bilderfassungseinheit können somit vorteilhaft Objekte in mittlerer bis ferner Distanz mit ausreichender Abbildung der Strukturen in die Bilddaten erzeugt werden, um damit eine zuverlässige und aussagefähige Auswertung der Bilddaten zu ermöglichen.

Gemäß einer weiteren vorteilhaften Ausführungsform des Fahrerassistenzsystems ist die Bilderfassungseinheit zur Erfassung von Farben ausgelegt, insbesondere zur Unterscheidung von in Lichtzeichenanlagen verwendeten vorschriftsmäßigen Signalfarben. Dazu zählen insbesondere die Farben Rot, Grün und/oder Gelb und/oder Grün, die als sogenannte Ampelfarben in Lichtsignalanlagen zur Verkehrslenkung zum Einsatz kommen, und/oder Blau. Indem die Bilderfassungseinheit dazu ausgelegt ist, zumindest eine dieser Farben zweifelsfrei identifizieren zu können, insbesondere die Farbe Rot, wird das Fahrerassistenzsystem in die Lage versetzt, in einem autonomen Fahrbetrieb die durch die Lichtzeichenanlage signalisierten Anweisungen zu befolgen und/oder in einem durch den Fahrer gesteuerten Betrieb diesen auf das Lichtsignal hinzuweisen und gegebenenfalls bei einem Übersehen des Lichtzeichens durch den Fahrer entsprechende Maßnahmen einzuleiten.

Gemäß einer weiteren vorteilhaften Ausführungsform des Fahrerassistenzsystems ist die Bilderfassungseinheit als Monokamera ausgebildet, insbesondere als einzige Kamera zur Erfassung der durch den Fahrzeugscheinwerfer beleuchtbaren Umgebung. Hierdurch kann der Aufwand für ein erfindungsgemäßes Fahrerassistenzsystem gering gehalten werden.

Gemäß einer weiteren vorteilhaften Ausführungsform umfasst der Fahrzeugscheinwerfer eine erste Lichtquelle, welche dazu ausgelegt ist, ausschließlich nicht polarisiertes Licht zu erzeugen. Das von der ersten Lichtquelle abgestrahlte Licht kann dazu verwendet werden, zusätzlich zu dem linear polarisierten Licht abgestrahlt zu werden, um damit den Verlust an Lichtleistung, welcher durch ein Polarisationsfilter hervorgerufen wird, zu kompensieren. Alternativ oder zusätzlich kann die erste Lichtquelle mit einem Polarisationsfilter ausgestattet werden, welches derart angeordnet ist, dass derjenige Anteil des von der ersten Lichtquelle erzeugten Lichts, welcher den Fahrzeugscheinwerfer in einer bestimmungsgemäßen Strahlrichtung verlässt, das Polarisationsfilter passieren muss. Das Polarisationsfilter kann hierbei eine variable Polarisierung des Lichts ermöglichen. Somit kann vorgesehen sein, dass das gesamte von dem Fahrzeugscheinwerfer abgestrahlte Licht, nämlich das nicht-polarisierte Licht sowie das polarisierte Licht, von einer einzigen Lichtquelle, nämlich der ersten Lichtquelle, erzeugt wird.

Gemäß einer vorteilhaften Weiterbildung umfasst der Fahrzeugscheinwerfer eine Polarisierungsvorrichtung, welche dazu ausgelegt ist, das von der ersten Lichtquelle erzeugte Licht in Abhängigkeit von einem Polarisationssteuersignal linear zu polarisieren. Hierzu kann beispielsweise ein statisches und stationäres Polarisationsfilter vorgesehen sein, welches mittels eines oder mehrerer mechanischer Elemente in den Strahlengang der Lichtquelle eingebracht werden kann. Dabei kann es sich beispielsweise um ein Piezoelement mit Spiegelaufbauten handeln. Durch eine elektrische Ansteuerung dieses Piezoelements kann somit der Strahlengang des Lichts verändert werden. Auf der Basis einer derartigen Anordnung kann mittels einer einzigen Lichtquelle sowie eines passiven, stationär fest eingebauten Polarisationsfilters eine dynamische Steuerung des Fahrzeugscheinwerfers mit wahlweise linear polarisiertem Licht oder unpolarisiertem Licht erzielen.

Gemäß einer weiteren vorteilhaften Ausführungsform umfasst der Fahrzeugscheinwerfer eine zweite Lichtquelle, welche dazu ausgelegt ist, ausschließlich linear polarisiertes Licht zu erzeugen. Hierbei kann entweder das Licht bereits aufgrund der Art der physikalischen Erzeugung bereits polarisiert sein, oder die zweite Lichtquelle ist permanent mit einem statischen Polarisationsfilter gekoppelt. Bei einer solchen Ausführungsform ist eine besonders einfache Implementierung der Erfindung möglich.

Gemäß einer weiteren vorteilhaften Ausführungsform ist der Fahrzeugscheinwerfer dazu ausgelegt, während eines bestimmungsgemäßen Betriebs des Fahrzeugscheinwerfers kontinuierlich, insbesondere mit konstanter Lichtleistung, die Beleuchtung der Umgebung auszuführen.

Gemäß einer weiteren vorteilhaften Ausführungsform ist der Fahrzeugscheinwerfer dazu ausgelegt, während eines bestimmungsgemäßen Betriebs des Fahrzeugscheinwerfers getaktet zwischen einer ersten Betriebsart mit ausschließlicher Abstrahlung von unpolarisiertem Licht und einer zweiten Betriebsart mit Abstrahlung von zumindest einem Teil der vorgebbaren Lichtleistung in Form von polarisiertem Licht zu wechseln. In vorteilhafter Weise ist der Fahrzeugscheinwerfer dazu ausgelegt, bei einem derartigen Wechselbetrieb zwischen zwei Betriebsarten insgesamt eine gleichbleibende Lichtleistung beizubehalten, sodass die Summe des polarisierten Lichts und des unpolarisierten Lichts in jeder der beiden Betriebsarten, der ersten Betriebsart und der zweiten Betriebsart, zur Beleuchtung der Umgebung mit der gleichen vorgebbaren Lichtleistung, insbesondere mit dem gleichen Lichtstrom, führt. Damit ist für einen menschlichen Betrachter, insbesondere für einen Fahrer des Kraftfahrzeugs, kein Unterschied zwischen der ersten Betriebsart und der zweiten Betriebsart wahrnehmbar.

Gemäß einer vorteilhaften Weiterbildung umfasst das Fahrerassistenzsystem eine Auswerteeinheit, welche dazu ausgelegt ist, die von der Bilderfassungseinheit in der ersten Betriebsart erzeugten Bilddaten und die von der Bilderfassungseinheit in der zweiten Betriebsart erzeugten Bilddaten zu vergleichen. Insbesondere kann hier vorgesehen sein, eine Differenzauswertung zwischen den jeweils erzeugten Bilddaten vorzunehmen, um somit den Unterschied zwischen den beiden Beleuchtungssituationen mit unterschiedlichen Anteilen von jeweils linear polarisiertem Licht an der gesamten vorgebbaren Lichtleistung zu ermitteln. Die Auswertung eines Bildes profitiert somit nicht nur von der Aufnahme bei polarisiertem Licht, welche zu einer Verminderung des Rauschens führt, vielmehr kann auch ein Abgleich mit Bildern bei unpolarisierter Beleuchtung durch die Auswertung der gemessenen Differenzen die Genauigkeit der Aufnahme erhöhen.

Die Differenzauswertung kann hierbei pixelweise erfolgen und/oder auf der Basis einer Korrektur der Verschiebung der Bildinhalte, was insbesondere aufgrund einer Eigenbewegung des Kraftfahrzeugs erforderlich werden kann. In diesem Fall können die beiden zu Zeitpunkten mit unterschiedlichen Betriebsarten erfassten Bilddaten auf der Basis von markanten Bildsignaturen aufeinander angepasst werden und auf der Basis eines neuen Rasters, welches nicht notwendigerweise mit den ursprünglichen Pixeln übereinstimmt, miteinander verglichen werden.

Gemäß einer weiteren vorteilhaften Ausführungsform umfasst das Fahrerassistenzsystem eine Anzeigevorrichtung, welche dazu ausgelegt ist, die von der Bilderfassungseinheit erzeugten Bilddaten zu empfangen und in Abhängigkeit von den Bilddaten ein Bild der Umgebung anzuzeigen. Insbesondere ist die Anzeige des Bilds der Umgebung für einen Fahrer des Kraftfahrzeugs vorgesehen. Durch die Bereitstellung der Bilddaten an den Fahrer des Kraftfahrzeugs mittels eines Bildschirms kann die verbesserte Sicht des Kraftfahrzeugs bei Nebel und Wasserdampf in der Atmosphäre auch an den Fahrer weitergegeben werden und stellt somit eine zusätzliche Hilfe für den Fahrer dar.

Bevorzugt kann ein Kraftfahrzeug ein erfindungsgemäßes Fahrerassistenzsystem umfassen, wodurch sich ein erfindungsgemäßes Kraftfahrzeug ergibt. Das Kraftfahrzeug kann einen Verbrennungsmotor und/oder einen Elektromotor als Antriebsmaschine aufweisen. Insbesondere kann das Kraftfahrzeug dazu ausgelegt sein, eine selbsttätige Geschwindigkeitsregelung und/oder eine Spurführungsregelung bereitzustellen.

Gemäß einer vorteilhaften Weiterbildung des Kraftfahrzeugs sind die erste Polarisationsrichtung und/oder die zweite Polarisationsrichtung orthogonal zu einer Fahrbahnoberfläche, auf der das Kraftfahrzeug steht oder rollt. Dadurch können insbesondere Reflexionen auf einer nassen Fahrbahnoberfläche, welche hauptsächlich eine horizontale Polarisationsrichtung aufweisen, von der Auswertung ausgeschlossen werden.

Die Erfindung geht des Weiteren aus von einem Verfahren zum Betreiben eines Fahrerassistenzsystems für ein Kraftfahrzeug durch Beleuchten einer Umgebung des Kraftfahrzeugs mittels eines Fahrzeugscheinwerfers und Auswerten von im Wesentlichen nur Licht mit einer vorgebbaren ersten Polarisationsrichtung zur Erzeugung von Bilddaten in Abhängigkeit von der Umgebung des Kraftfahrzeugs. Erfindungsgemäß wird das Verfahren weitergebildet durch während eines bestimmungsgemäßen Betriebs, bei welchem eine vorgebbare Lichtleistung durch den Fahrzeugscheinwerfer bereitgestellt wird, Bereitstellen von linear polarisiertem Licht mit einer zweiten Polarisationsrichtung zur Beleuchtung der Umgebung gemäß einem vorgebbaren Pulsmuster und/oder mit einem vorgebbaren Anteil an der Lichtleistung.

Die für das erfindungsgemäße Fahrerassistenzsystem beschriebenen Vorteile und bevorzugten Ausführungsformen gelten auch für das erfindungsgemäße Kraftfahrzeug und, soweit anwendbar, auch umgekehrt. Ebenso gelten die für die erfindungsgemäße Vorrichtung beschriebenen Vorteile und Merkmale sowie Ausführungsformen gleichermaßen für entsprechende Verfahren und umgekehrt. Folglich können für Vorrichtungsmerkmale entsprechende Verfahrensmerkmale und umgekehrt vorgesehen sein.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung offenbart anzusehen, die in den Figuren nicht explizit gezeigt oder erläutert sind, jedoch durch separierte Merkmalskombination aus den erläuterten Ausführungen hervorgehen und erzeugbar sind.

Weitere Vorteile und Merkmale ergeben sich anhand der folgenden Beschreibung von Ausführungsbeispielen unter Berücksichtigung der beigefügten Figuren. In den Figuren bezeichnen gleiche Bezugszeichen gleiche Merkmale und Funktionen.

Es zeigen:
- Fig. 1: in vereinfachter schematischer Darstellung ein bevorzugtes Ausführungsbeispiel eines erfindungsgemäßen Kraftfahrzeugs;
- Fig. 2: in vereinfachter schematischer Darstellung eine bevorzugte erste Ausführungsform eines erfindungsgemäßen Fahrerassistenzsystems;
- Fig. 3: in vereinfachter schematischer Darstellung ein Ansteuerschema zur Verwendung mit dem Fahrerassistenzsystem gemäß der Darstellung in der Fig. 2;
- Fig. 4: in vereinfachter schematischer Darstellung eine bevorzugte zweite Ausführungsform eines erfindungsgemäßen Fahrerassistenzsystems;
- Fig. 5: in vereinfachter schematischer Darstellung eine bevorzugte dritte Ausführungsform eines erfindungsgemäßen Fahrerassistenzsystems; und
- Fig. 6: in vereinfachter schematischer Darstellung eine bevorzugte vierte Ausführungsform eines erfindungsgemäßen Fahrerassistenzsystems.

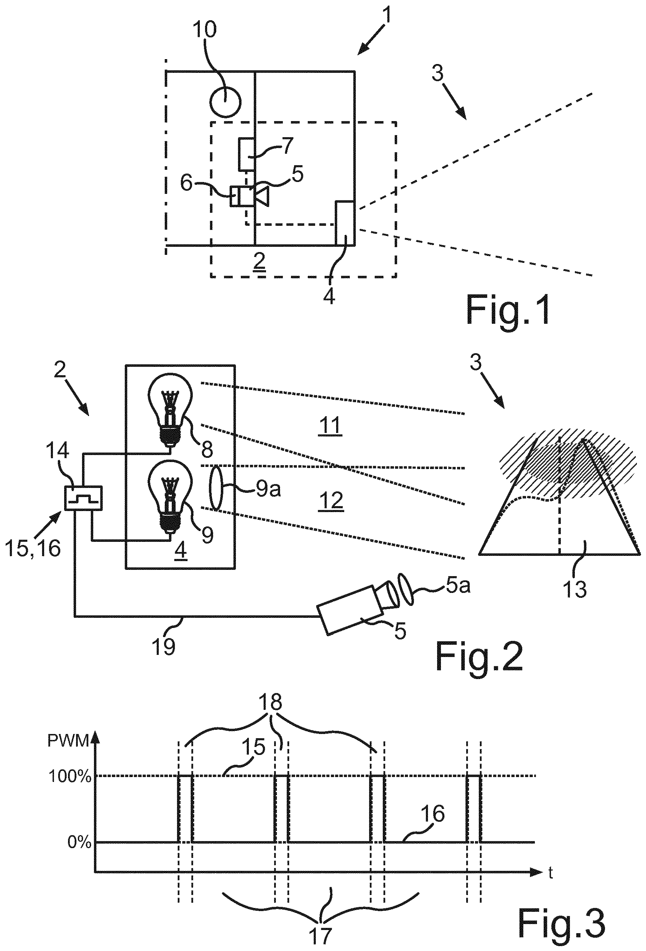

Fig. 1 zeigt ein Kraftfahrzeug 1 gemäß einem bevorzugten Ausführungsbeispiel der Erfindung, bei dem es sich insbesondere um einen Personenkraftwagen (Pkw) handeln kann. Ohne Einschränkung ist die Erfindung in gleicher Weise ebenso für Lastkraftwagen, Busse, Nutzfahrzeuge und sonstige Kraftfahrzeuge verwendbar. Vor dem Kraftfahrzeug 1 liegt eine von einem Fahrerassistenzsystem 2 überwachte Umgebung 3, welche von einem Fahrzeugscheinwerfer 4 des Fahrerassistenzsystems 2 beleuchtet wird. Das Fahrerassistenzsystem 2 umfasst des Weiteren eine Bilderfassungseinheit 5, welche Bilddaten in Abhängigkeit von der Umgebung 3 des Kraftfahrzeugs 1 erzeugt. Bei der Bilderfassungseinheit 5 kann es sich insbesondere um eine Monokamera handeln, welche bevorzugt in der Nähe eines Innenspiegels des Kraftfahrzeugs 1 angeordnet ist. Der Bilderfassungseinheit 5 ist eine Auswerteeinheit 6 nachgeschaltet, welche die erzeugten Bilddaten auswertet und für die weitere Verarbeitung durch das Fahrerassistenzsystem 2 bereitstellt. Optional kann das Fahrerassistenzsystem 2 eine Anzeigevorrichtung 7 umfassen, welche insbesondere durch einen Bildschirm ausgebildet ist, welcher ein Bild der Umgebung 3 an einen Fahrer 10 des Kraftfahrzeugs 1 bereitstellt.

Fig. 2 zeigt ein bevorzugtes erstes Ausführungsbeispiel des Fahrerassistenzsystems 2. Die Bilderfassungseinheit 5 ist hierbei mit einem Polarisationsfilter 5a ausgestattet. Die Bilderfassungseinheit 5 ist auf die Umgebung 3 ausgerichtet, in der eine Fahrbahnoberfläche 13 dargestellt ist. Der Fahrzeugscheinwerfer 4 umfasst eine erste Lichtquelle 8, welche dazu ausgelegt ist, ein nicht polarisiertes Licht 11 auszustrahlen. Des Weiteren umfasst der Fahrzeugscheinwerfer 4 eine zweite Lichtquelle 9, welche dazu ausgelegt ist, linear polarisiertes Licht 12 abzustrahlen. Zu diesem Zweck ist die zweite Lichtquelle 9 mit einem Polarisationsfilter 9a ausgestattet. Das Fahrerassistenzsystem 2 umfasst außerdem ein Steuergerät 14, welches dazu ausgelegt ist, die erste Lichtquelle 8 und die zweite Lichtquelle 9 anzusteuern. Die Ansteuerung der ersten Lichtquelle 8 und der zweiten Lichtquelle 9 erfolgt hierbei in Abhängigkeit von einem ersten Pulsmuster 15 sowie einem zweiten Pulsmuster 16. Das erste Pulsmuster 15 ist hierbei dem Betrieb der ersten Lichtquelle 8 zugeordnet, das zweite Pulsmuster 16 ist dem Betrieb der zweiten Lichtquelle 9 zugeordnet. Die Ansteuerung der beiden Lichtquellen, der ersten Lichtquelle 8 und der zweiten Lichtquelle 9, sowie der Bilderfassungseinheit 5 ist durch das Steuergerät 14 über eine Synchronisationsverbindung 19 synchronisiert.

Ein beispielhaftes Ansteuerungsschema für das Steuergerät 14 ist in der Fig. 3 dargestellt. Hierbei sind das erste Pulsmuster 15 sowie das zweite Pulsmuster 16 als Funktion einer auf der Abszisse aufgetragen Zeit t dargestellt. An der Ordinate ist ein Pulsweitenmodulationsverhältnis PWM aufgetragen, welches in der Darstellung zwei Zustände, nämlich 0 Prozent und 100 Prozent annimmt. In einer ersten Betriebsart 17 weist das erste Pulsmuster 15 einen Wert von 100 Prozent auf und das zweite Pulsmuster 16 einen Wert von 0 Prozent auf. In einer zweiten Betriebsart 18 sind diese Werte gerade vertauscht, das heißt das erste Pulsmuster 15 weist einen Wert von 0 Prozent und das zweite Pulsmuster 16 weist einen Wert von 100 Prozent auf. Mit anderen Worten werden gemäß der vorliegenden Darstellung die erste Lichtquelle 8 und die zweite Lichtquelle 9 jeweils abwechselnd mit voller Leistung betrieben und wechselweise vollständig ausgeschaltet. Dieses Ansteuerungsmuster wird zyklisch wiederholt, sodass sich ein periodischer Verlauf ergibt. Die hierdurch entstehenden Intervalle, in denen die erste Lichtquelle 8 ohne Polarisation die Umgebung 3, insbesondere die Fahrbahnoberfläche 13, ausleuchtet, erzeugen bei dem Fahrer 10 den Eindruck eines homogenen Lichtbildes. Die Dauer der Intervalle, in denen die polarisierte zweite Lichtquelle 9 aktiviert ist, wird so gewählt, dass sie für den Fahrer 10 nicht mehr wahrnehmbar sind. Die Aufnahme der mit dem Polarisationsfilter 5a versehenen Bilderfassungseinheit 5 ist mit der polarisierten zweiten Lichtquelle 9 synchronisiert. Bei der Aktivierung der zweiten Lichtquelle 9 kann die erste Lichtquelle 8, insbesondere alle übrigen Lichtquellen des Fahrzeugscheinwerfers 4, deaktiviert werden. Dies entspricht dem Ansteuerschema gemäß der Fig. 3. Eine derartige Deaktivierung ist jedoch nicht zwingend erforderlich, vielmehr kann auch vorgesehen sein, in der zweiten Betriebsart einen von Null (0 Prozent) verschiedenen Wert für das erste Pulsmuster 15 in der zweiten Betriebsart 18 vorzugeben.

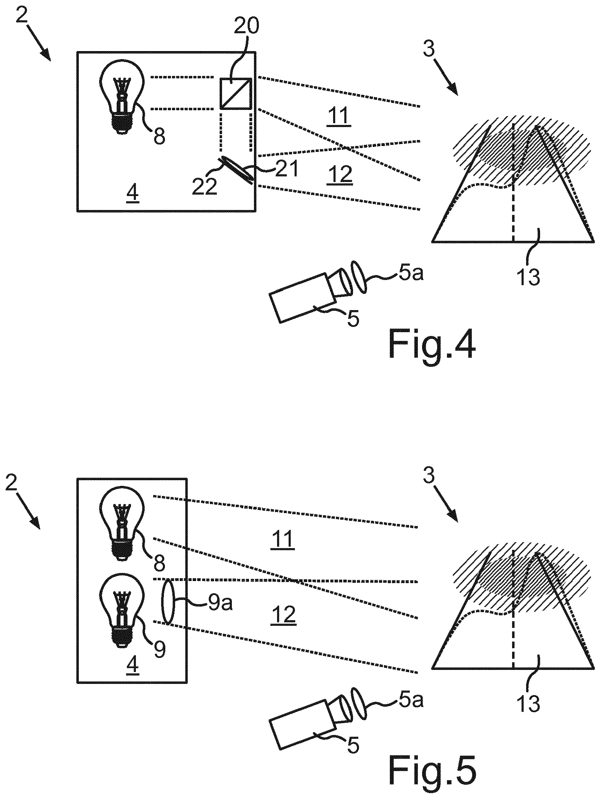

Gemäß einer zweiten bevorzugten Ausführungsform des Fahrerassistenzsystems 2, wie in der Fig. 4 dargestellt, umfasst der Fahrzeugscheinwerfer 4 lediglich eine erste Lichtquelle 8, welche dazu ausgelegt ist, sowohl unpolarisiertes Licht 11 als auch polarisiertes Licht 12 abzustrahlen. Die bereits aus den Fig. 1 und 2 bekannten Bezugszeichen gelten entsprechend und werden im Folgenden nicht mehr separat erläutert. Die erste Lichtquelle 8 ist hierbei nicht notwendigerweise als ein einziges Leuchtmittel ausgebildet, vielmehr steht die erste Lichtquelle 8 stellvertretend für eine funktionelle Einheit von gegebenenfalls mehreren einzelnen Leuchtmitteln. Beispielsweise kann es sich hierbei um eine oder auch mehrere Leuchtdioden (LED) oder um eine oder mehrere Laserdioden handeln.

Das von der ersten Lichtquelle 8 abgestrahlte Licht wird mittels eines mechanischen Elements 20 in seinem Strahlengang verändert. Das mechanische Element 20 kann beispielsweise durch ein Piezoelement mit Spiegelaufbauten ausgebildet sein. Ebenso kann vorgesehen sein, dass mehrere derartige mechanische Elemente in den Strahlengang eingebracht werden. Mittels einer elektrischen Ansteuerung ändert das mechanische Element 20 den Strahlengang des Lichts. So wird in der ersten Betriebsart unpolarisiertes Licht 11 abgestrahlt, wohingegen in der zweiten Betriebsart das mechanische Element 20 derart angesteuert wird, dass das Licht umgelenkt wird auf einen Spiegel 22, von dem aus der Strahlengang des Lichts wieder in die Abstrahlrichtung des Fahrzeugscheinwerfers 4 umgelenkt wird. Bei seinem Weg gemäß dem umgelenkten Strahlengang passiert das von der ersten Lichtquelle 8 erzeugte Licht ein Polarisationsfilter 21, welches beispielhaft in der Nähe des Spiegels 22 angeordnet ist. Diese Anordnung des Polarisationsfilters 21 sowie der Spiegel 22 sind lediglich zur Erläuterung des Prinzips, das dieser zweiten Ausführungsform zugrundeliegt, dargestellt und nicht einschränkend zu verstehen.

In Synchronisation mit der Bilderfassungseinheit 5 des Kraftfahrzeugs 1 werden Zeitintervalle definiert, in denen nur polarisiertes Licht 12 auf die Fahrbahnoberfläche 13 trifft und diese Zeitintervalle gesondert von der Bilderfassungseinheit 5 aufgenommen und ausgewertet werden. Auf diese Weise ergeben sich Momentaufnahmen mit definierter Polarisationsrichtung des Lichts.

Ein bevorzugtes drittes Ausführungsbeispiel eines erfindungsgemäßen Fahrerassistenzsystems 2 ist in der Fig. 5 dargestellt. Hierbei umfasst der Fahrzeugscheinwerfer 4 eine erste Lichtquelle 8 sowie eine zweite Lichtquelle 9, wobei die erste Lichtquelle 8 unpolarisiertes Licht 11 und die zweite Lichtquelle 9 durch das Polarisationsfilter 9a linear polarisiertes Licht 12 abstrahlt. Wie bereits bei dem ersten Ausführungsbeispiel dargestellt, ist hier zusätzlich zu der ersten Lichtquelle 8, welche einer Hauptlichtquelle des Fahrzeugscheinwerfers 4 darstellen kann, eine weitere Lichtquelle in Form der zweiten Lichtquelle 9 innerhalb des Fahrzeugscheinwerfers 4 vorgesehen. Die Lichtleistung, die durch die zweite Lichtquelle 9 bereitgestellt wird, ist so an das gesamte Fahrerassistenzsystem 2 angepasst, dass die Bilderfassungseinheit 5 von dem unpolarisierten Licht 11 nicht überbeleuchtet wird. Vor der Bilderfassungseinheit 5 ist ein Polarisationsfilter 5a positioniert. Bei diesem Aufbau kompensiert die erste Lichtquelle 8, beispielsweise das Fernlicht des Fahrzeugscheinwerfers 4, den Verlust an Lichtleistung, der durch das Polarisationsfilter 9a an der zweiten Lichtquelle 9 hervorgerufen wird. Somit werden gemäß der dritten Ausführungsform das unpolarisierte Licht 11 und das linear polarisierte Licht 12 in einer vorgebbaren Zusammensetzung statisch auf die Umgebung 3 eingestrahlt.

Alternativ kann vorgesehen sein, entsprechend dem in der ersten Ausführungsform vorgeschlagenen Prinzip eine kombinierte Ansteuerung der ersten Lichtquelle 8 und der zweiten Lichtquelle 9 vorzunehmen, bei der sowohl abwechselnd zwischen der ersten Betriebsart 17 und der zweiten Betriebsart 18 gewechselt wird als auch die Verteilung zwischen unpolarisiertem Licht 11 und polarisiertem Licht 12 nicht ausschließlich bei 0 Prozent beziehungsweise 100 Prozent eingestellt wird, sondern vielmehr ein frei vorgebbares Mischungsverhältnis zwischen linear polarisiertem Licht 12 und unpolarisiertem Licht 11 ermöglicht wird. Hierdurch kann insbesondere die gesamte Lichtleistung, welche auf die Umgebung 3 eingestrahlt wird, gemäß dem Helligkeitsempfinden des Fahrers 10 entsprechend angesteuert werden, sodass für diesen kein Unterschied zwischen der ersten Betriebsart 17 und der zweiten Betriebsart 18 feststellbar ist. Auf diese Weise können störende Stroboskopeffekte, wie sie insbesondere aus einem Kraftfahrzeug aufgrund der Eigenbewegung des Kraftfahrzeugs bekannt sind, vermieden werden. Bei einem periodischen Beleuchtungswechsel ist das Verhältnis der Aktivierungsdauer zwischen polarisiertem Licht 12 und unpolarisiertem Licht 11 nicht auf 1:1 festgelegt, es kann vielmehr angepasst werden. Die Auswertung des Bildes profitiert nicht nur von der Aufnahme bei polarisiertem Licht 12, die zu einer Verminderung des Rauschens führt, sondern auch ein Abgleich mit Bildern bei Beleuchtung mit unpolarisiertem Licht 11 kann durch ein Extrahieren der gemessenen Differenzen die Genauigkeit der Aufnahme erhöhet werden.

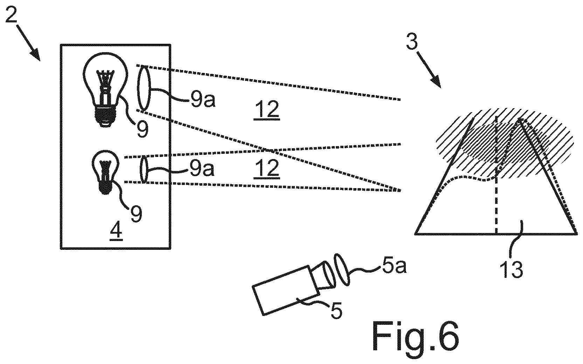

Ein bevorzugtes viertes Ausführungsbeispiel eines erfindungsgemäßen Fahrerassistenzsystems 2 ist in der Fig. 6 dargestellt. Hierbei sind beide Lichtquellen des Fahrzeugscheinwerfers 4 entsprechend den bisherigen Darstellungen als zweite Lichtquellen 9 ausgeführt, welche jeweils ein Polarisationsfilter 9a vorgeschaltet haben. Damit wird von dem Fahrzeugscheinwerfer 4 lediglich linear polarisiertes Licht 12 abgestrahlt. Dieses leuchtet die Umgebung 3 mit der Fahrbahnoberfläche 13 aus und kann von der mit einem passenden Polarisationsfilter 5a versehenen Bilderfassungseinheit 5 interpretiert werden. Die vierte Ausführungsform lässt sich somit als Spezialfall (Grenzfall) der zuvor dargestellten ersten drei Ausführungsbeispiele betrachten. Die erste Lichtquelle 8 - beispielsweise eine Fernlichtquelle - ist hierbei durch eine zweite Lichtquelle 9 ersetzt, sodass durch den Fahrzeugscheinwerfer 4 kein unpolarisiertes Licht 11 mehr abgestrahlt wird.

Selbstverständlich müssen die als zwei als separat dargestellte zweite Lichtquellen 9 nicht notwendigerweise in Form von zwei getrennten Komponenten vorliegen, vielmehr kann der Fahrzeugscheinwerfer 4 auch eine einzige Lichtquelle 9 aufweisen (vergleiche Darstellung Fig. 4 mit einer Einstellung des mechanischen Elements 20, welche das Polarisationsfilter 21 permanent in den Strahlengang bringt). Damit kann der Fahrzeugscheinwerfer 4 beliebig viele Leuchtmittel umfassen, welche linear polarisiertes Licht 12 mit einer vorgebbaren Polarisationsrichtung abstrahlen.

Das Polarisationsfilter 5a im Strahlengang der Bilderfassungseinheit 5 kann bei jedem der zuvor dargestellten Ausführungsbeispiele sowohl statisch als auch elektrisch ansteuerbar ausgeführt sein. Im letzteren Fall wird das einfallende Licht nur temporär durch ein statisches Polarisationsfilter geleitet, bevor es auf die Bilderfassungseinheit 5 trifft.

Die Ausführungsbeispiele dienen lediglich der Erläuterung der Erfindung und sind für diese nicht beschränkend. So kann insbesondere die Art der Erzeugung des polarisierten Lichts sowie eine Zeit und/oder amplitudenabhängige Zusammensetzung der Lichtleistung in Abhängigkeit von dem unpolarisierten Licht 11 und dem polarisierten Licht 12 beliebig gestaltet sein, ohne den Gedanken der Erfindung zu verlassen. Insbesondere im Zusammenhang mit einem bestimmten Ausführungsbeispiel offenbarte Merkmale, die erkennbar nicht notwendigerweise auf das jeweilige Ausführungsbeispiel beschränkt sind, beispielsweise eine konkrete Ausgestaltung der ersten Lichtquelle 8 und/oder der zweiten Lichtquelle 9 auf LED-Basis, können mit den übrigen Ausführungsbeispielen kombiniert werden.

Somit wurde voranstehend gezeigt, wie eine verbesserte Umgebungserkennung mittels polarisierter Beleuchtung ermöglicht werden kann.

## Patentansprüche

1. Fahrerassistenzsystem (2) für ein Kraftfahrzeug (1) umfassend:
- einen Fahrzeugscheinwerfer (4), der eine erste Lichtquelle (8) umfasst, welche dazu ausgelegt ist, ein nicht polarisiertes Licht (11) auszustrahlen, und der eine zweite Lichtquelle (9) umfasst, welche dazu ausgelegt ist, linear polarisiertes Licht (12) abzustrahlen, und welcher dazu ausgelegt ist, eine Umgebung (3) des Kraftfahrzeugs (1) zu beleuchten, und
- eine Bilderfassungseinheit (5), die durch ein Steuergerät (14) mit der ersten Lichtquelle (8) und der zweiten Lichtquelle (9) über eine Synchronisationsverbindung (19) synchronisiert ist, und welche dazu ausgelegt ist, im Wesentlichen nur Licht mit einer vorgebbaren ersten Polarisationsrichtung zur Erzeugung von Bilddaten in Abhängigkeit von der Umgebung (3) des Kraftfahrzeugs (1) auszuwerten,
wobei der Fahrzeugscheinwerfer (4) dazu ausgelegt ist, bei einem bestimmungsgemäßen Betrieb, bei welchem eine vorgebbare Lichtleistung durch den Fahrzeugscheinwerfer (4) bereitgestellt wird und der eine erste Betriebsart (17) und eine zweite Betriebsart (18) umfasst,
- bei der zweiten Betriebsart (18) linear polarisiertes Licht (12) durch die zweite Lichtquelle (9) mit einer zweiten Polarisationsrichtung zur Beleuchtung der Umgebung (3) bereitzustellen und
- bei der ersten Betriebsart (17) nicht polarisiertes Licht (11) durch die erste Lichtquelle (8) bereitzustellen, wobei
- die erste Lichtquelle (8) und die zweite Lichtquelle (9) jeweils abwechselnd mit voller Leistung betrieben und wechselweise vollständig ausgeschaltet werden und dies zyklisch wiederholt wird, sodass sich ein periodischer Verlauf ergibt.

2. Fahrerassistenzsystem (2) nach Anspruch 1,
**dadurch gekennzeichnet,**
**dass** die zweite Polarisationsrichtung gleich der ersten Polarisationsrichtung ist.

3. Fahrerassistenzsystem (2) nach einem der vorhergehenden Ansprüche,
**dadurch gekennzeichnet,**
**dass** die Bilderfassungseinheit (5) eine Auflösung von zumindest VGA-Auflösung mit mindestens 640 mal 480 Bildpunkten aufweist.

4. Fahrerassistenzsystem (2) nach einem der vorhergehenden Ansprüche,
**dadurch gekennzeichnet,**
**dass** die Bilderfassungseinheit (5) zur Erfassung von Farben ausgelegt ist, insbesondere zur Unterscheidung von in Lichtzeichenanlagen verwendeten vorschriftsmäßigen Signalfarben.

5. Fahrerassistenzsystem (2) nach einem der vorhergehenden Ansprüche,
**dadurch gekennzeichnet,**
**dass** die Bilderfassungseinheit (5) als Monokamera ausgebildet ist, insbesondere als einzige Kamera zur Erfassung der durch den Fahrzeugscheinwerfer (4) beleuchtbaren Umgebung.

6. Fahrerassistenzsystem (2) nach einem der vorhergehenden Ansprüche,
**dadurch gekennzeichnet,**
**dass** der Fahrzeugscheinwerfer (4) eine erste Lichtquelle (8) umfasst, welche dazu ausgelegt ist, ausschließlich nicht polarisiertes Licht (11) zu erzeugen.

7. Fahrerassistenzsystem (2) nach Anspruch 6,
**dadurch gekennzeichnet,**
**dass** der Fahrzeugscheinwerfer (4) eine Polarisierungsvorrichtung umfasst, welche dazu ausgelegt, das von der ersten Lichtquelle erzeugte Licht in Abhängigkeit von einem Polarisationssteuersignal linear zu polarisieren.

8. Fahrerassistenzsystem (2) nach einem der vorhergehenden Ansprüche,
**dadurch gekennzeichnet,**
**dass** der Fahrzeugscheinwerfer (4) eine zweite Lichtquelle (9) umfasst, welche dazu ausgelegt ist, ausschließlich linear polarisiertes Licht (12) zu erzeugen.

9. Fahrerassistenzsystem (2) nach einem der vorhergehenden Ansprüche,
**dadurch gekennzeichnet,**
**dass** der Fahrzeugscheinwerfer (4) dazu ausgelegt ist, Bei dem Wechsel zwischen der ersten Betriebsart und der zweiten Betriebsart insgesamt eine gleichbleibende Lichtleistung beizubehalten.

10. Fahrerassistenzsystem (2) nach einem der Ansprüche 1 - 8,
**dadurch gekennzeichnet,**
**dass** der Fahrzeugscheinwerfer (4) dazu ausgelegt ist, während eines bestimmungsgemäßen Betriebs des Fahrzeugscheinwerfers (4) getaktet zwischen einer ersten Betriebsart (17) mit ausschließlicher Abstrahlung von unpolarisiertem Licht (11) und einer zweiten Betriebsart (18) mit Abstrahlung von zumindest einem Teil der vorgebbaren Lichtleistung in Form von polarisiertem Licht (12) zu wechseln.

11. Fahrerassistenzsystem (2) nach Anspruch 10,
**gekennzeichnet durch**
eine Auswerteeinheit (6), welche dazu ausgelegt ist, die von der Bilderfassungseinheit (5) in der ersten Betriebsart (17) erzeugten Bilddaten und die von der Bilderfassungseinheit (5) in der zweiten Betriebsart (18) erzeugten Bilddaten zu vergleichen.

12. Fahrerassistenzsystem (2) nach einem der vorhergehenden Ansprüche,
**gekennzeichnet durch**
eine Anzeigevorrichtung (7), welche dazu ausgelegt ist, die von der Bilderfassungseinheit (5) erzeugten Bilddaten zu empfangen und in Abhängigkeit von den Bilddaten ein Bild der Umgebung (3) anzuzeigen.

13. Kraftfahrzeug (1) mit einem Fahrerassistenzsystem (2) nach einem der vorhergehenden Ansprüche.

14. Kraftfahrzeug (1) nach Anspruch 13,
**dadurch gekennzeichnet,**
**dass** die erste Polarisationsrichtung und/oder die zweite Polarisationsrichtung orthogonal zu einer Fahrbahnoberfläche (13) ist, auf der das Kraftfahrzeug (1) steht oder rollt.

15. Verfahren zum Betreiben eines Fahrerassistenzsystems (2) für ein Kraftfahrzeug (1), durch:
- Beleuchten einer Umgebung (3) des Kraftfahrzeugs (1) mittels eines Fahrzeugscheinwerfers (4), der eine erste Lichtquelle (.8) umfasst, welche dazu ausgelegt ist, ein nicht polarisiertes Licht (11) auszustrahlen, und der eine zweite Lichtquelle (9) umfasst, welche dazu ausgelegt ist, linear polarisiertes Licht (12) abzustrahlen; und
- Auswerten von im Wesentlichen nur Licht mit einer vorgebbaren ersten Polarisationsrichtung zur Erzeugung von Bilddaten in Abhängigkeit von der Umgebung des Kraftfahrzeugs (1) unter Verwendung einer Bilderfassungseinheit (5), die durch ein Steuergerät (14) mit der ersten Lichtquelle (8) und der zweiten Lichtquelle (9) über eine Synchronisationsverbindung (19) synchronisiert wird;
wobei
- während eines bestimmungsgemäßen Betriebs, bei welchem eine vorgebbare Lichtleistung durch den Fahrzeugscheinwerfer (4) bereitgestellt wird und der eine erste Betriebsart (17) und eine zweite Betriebsart (18) umfasst,
- Bereitstellen von linear polarisiertem Licht (12) durch die zweite Lichtquelle (9) mit einer zweiten Polarisationsrichtung zur Beleuchtung der Umgebung (3) während der zweiten Betriebsart (18) und
- Bereitstellen von nicht polarisierten Licht (11) durch die erste Lichtquelle (8) während der ersten Betriebsart (17);
- wobei die erste Lichtquelle (8) und die zweite Lichtquelle (9) jeweils abwechselnd mit voller Leistung betrieben und wechselweise ausgeschaltet werden und dies zyklisch wiederholt wird, sodass sich ein periodischer Verlauf ergibt.

## Claims

1. Driver assistance system (2) for a motor vehicle (1), comprising:
- a vehicle headlamp (4), which comprises a first light source (8) designed to emit non-polarised light (11), and which comprises a second light source (9) designed to emit linearly polarised light (12), and which is designed to light surroundings (3) of the motor vehicle (1), and
- an image capturing unit (5), which is synchronised with the first light source (8) and the second light source (9) by a control device (14) by means of a synchronisation link (19), and which is designed to evaluate substantially only light with a predeterminable first polarisation direction for the generation of image data as a function of the surroundings (3) of the motor vehicle (1),
wherein in normal operation, in which a predeterminable light output is provided by the vehicle headlamp (4) and which comprises a first mode of operation (17) and a second mode of operation (18), the vehicle headlamp (4) is designed such that
- in the second mode of operation (18) it provides linearly polarised light (12) through the second light source (9) with a second polarisation direction for lighting the surroundings (3) and
- in the first mode of operation (17) it provides non-polarised light (11) through the first light source (8), wherein
- the first light source (8) and the second light source (9) are in each case alternately operated at full power and alternately completely switched off, and this is repeated cyclically so that a periodic pattern is produced.

2. Driver assistance system (2) according to claim 1,
**characterised in that**
the second polarisation direction is the same as the first polarisation direction.

3. Driver assistance system (2) according to one of the preceding claims,
**characterised in that**
the image capturing unit (5) has a resolution of at least VGA resolution with at least 640 x 480 pixels.

4. Driver assistance system (2) according to one of the preceding claims,
**characterised in that**
the image capturing unit (5) is designed to detect colours, in particular for distinguishing prescribed signal colours used in traffic lights.

5. Driver assistance system (2) according to one of the preceding claims,
**characterised in that**
the image capturing unit (5) is configured as a mono camera, in particular as a single camera for detecting the surroundings which can be lighted by the vehicle headlamp (4).

6. Driver assistance system (2) according to one of the preceding claims,
**characterised in that**
the vehicle headlamp (4) comprises a first light source (8), which is designed to generate exclusively non-polarised light (11).

7. Driver assistance system (2) according to claim 6,
**characterised in that**
the vehicle headlamp (4) comprises a polarisation device which is designed to linearly polarise the light generated by the first light source as a function of a polarisation control signal.

8. Driver assistance system (2) according to one of the preceding claims,
**characterised in that**
the vehicle headlamp (4) comprises a second light source (9) which is designed to generate exclusively linearly polarised light (12).

9. Driver assistance system (2) according to one of the preceding claims,
**characterised in that**
the vehicle headlamp (4) is designed to maintain a constant light output overall during switching between the first mode of operation and the second mode of operation.

10. Driver assistance system (2) according to one of claims 1 - 8,
**characterised in that**
the vehicle headlamp (4) is designed so that, during normal operation of the vehicle headlamp (4), it alternates cyclically between a first mode of operation (17) with exclusive emission of unpolarised light (11) and a second mode of operation (18) with emission of at least a part of the predeterminable light output in the form of polarised light (12).

11. Driver assistance system (2) according to claim 10,
**characterised by**
an evaluation unit (6) which is designed to compare the image data generated by the image capturing unit (5) in the first mode of operation (17) and the image data generated by the image capturing unit (5) in the second mode of operation (18).

12. Driver assistance system (2) according to one of the preceding claims,
**characterised by**
a display device (7), which is designed to receive the image data generated by the image capturing unit (5) and to display an image of the surroundings (3) as a function of the image data.

13. Motor vehicle (1) with a driver assistance system (2) according to one of the preceding claims.

14. Motor vehicle (1) according to claim 13,
**characterised in that**
the first polarisation direction and/or the second polarisation direction are/is orthogonal to a roadway surface (13) on which the motor vehicle (1) is standing or moving.

15. Method for operating a driver assistance system (2) for a motor vehicle (1), by:
- lighting surroundings (3) of the motor vehicle (1) by means of a vehicle headlamp (4), which comprises a first light source (8) designed to emit a non-polarised light (11), and which comprises a second light source (9) designed to emit linearly polarised light (12); and
- evaluating substantially only light with a predeterminable first polarisation direction for the generation of image data as a function of the surroundings of the motor vehicle (1) using an image capturing unit (5), which is synchronised by a control device (14) with the first light source (8) and the second light source (9) by means of a synchronisation link (19);
wherein
- during normal operation, in which a predeterminable light output is provided by the vehicle headlamp (4) and which comprises a first mode of operation (17) and a second mode of operation (18),
- providing linearly polarised light (12) through the second light source (9) with a second polarisation direction for lighting the surroundings (3) during the second mode of operation (18), and
- providing non-polarised light (11) through the first light source (8) during the first mode of operation (17);
- wherein the first light source (8) and the second light source (9) are in each case alternately operated at full power and alternately switched off, and this is repeated cyclically so that a periodic pattern is produced.

## Revendications

1. Système d'assistance au conducteur (2) pour un véhicule automobile (1), comprenant :
- un phare de véhicule (4) qui comprend une première source de lumière (8) conçue pour diffuser une lumière non polarisée (11), et qui comprend une seconde source de lumière (9) conçue pour émettre une lumière polarisée de manière linéaire (12), et qui est conçu pour éclairer un environnement (3) du véhicule automobile (1), et
- une unité de détection d'image (5), qui est synchronisée grâce à un dispositif de commande (14) avec la première source de lumière (8) et la seconde source de lumière (9) par l'intermédiaire d'une liaison de synchronisation (19), et qui est conçue pour n'évaluer essentiellement que de la lumière présentant une première direction de polarisation prédéfinissable afin de générer des données d'image en fonction de l'environnement (3) du véhicule automobile (1),
dans lequel le phare de véhicule (4) est conçu pour, dans le cas d'un fonctionnement nominal au cours duquel une puissance lumineuse prédéfinissable est fournie par le phare de véhicule (4) et qui comprend un premier mode de fonctionnement (17) et un second mode de fonctionnement (18),
- dans le second mode de fonctionnement (18), fournir de la lumière polarisée de manière linéaire (12) grâce à la seconde source de lumière (9) avec une seconde direction de polarisation afin d'éclairer l'environnement (3) et
- dans le premier mode de fonctionnement (17), fournir de la lumière non polarisée (11) grâce à la première source de lumière (8), dans lequel
- la première source de lumière (8) et la seconde source de lumière (9), respectivement, fonctionnent à pleine puissance de manière alternée et sont complètement éteintes de manière alternée, et cela est répété de manière cyclique de sorte qu'un tracé périodique en résulte.

2. Système d'assistance au conducteur (2) selon la revendication 1,
**caractérisé en ce que**
la seconde direction de polarisation est identique à la première direction de polarisation.

3. Système d'assistance au conducteur (2) selon l'une quelconque des revendications précédentes,
**caractérisé en ce que**
l'unité de détection d'image (5) présente une résolution correspondant à au moins une résolution VGA d'au moins 640 x 480 pixels.

4. Système d'assistance au conducteur (2) selon l'une quelconque des revendications précédentes,
**caractérisé en ce que**
l'unité de détection d'image (5) est conçue pour détecter des couleurs, en particulier pour discriminer des couleurs de signaux réglementaires utilisées dans des équipements de signalisation lumineuse.

5. Système d'assistance au conducteur (2) selon l'une quelconque des revendications précédentes,
**caractérisé en ce que**
l'unité de détection d'image (5) est conçue en tant que monocaméra, en particulier en tant que caméra unique de détection de l'environnement pouvant être éclairé par le phare de véhicule (4).

6. Système d'assistance au conducteur (2) selon l'une quelconque des revendications précédentes,
**caractérisé en ce que**
le phare de véhicule (4) comprend une première source de lumière (8) conçue pour générer exclusivement de la lumière non polarisée (11).

7. Système d'assistance au conducteur (2) selon la revendication 6,
**caractérisé en ce que**
le phare de véhicule (4) comprend un dispositif de polarisation conçu pour polariser de manière linéaire la lumière générée par la première source de lumière en fonction d'un signal de commande de polarisation.

8. Système d'assistance au conducteur (2) selon l'une quelconque des revendications précédentes,
**caractérisé en ce que**
le phare de véhicule (4) comprend une seconde source de lumière (9) conçue pour générer exclusivement de la lumière polarisée de manière linéaire (12).

9. Système d'assistance au conducteur (2) selon l'une quelconque des revendications précédentes,
**caractérisé en ce que**
le phare de véhicule (4) est conçu pour maintenir principalement une puissance lumineuse constante lors de la permutation entre le premier mode de fonctionnement et le second mode de fonctionnement.

10. Système d'assistance au conducteur (2) selon l'une quelconque des revendications 1 - 8,
**caractérisé en ce que**
le phare de véhicule (4) est conçu pour, pendant un fonctionnement nominal du phare de véhicule (4), permuter de manière cadencée entre un premier mode de fonctionnement (17) avec émission exclusive de lumière non polarisée (11) et un second mode de fonctionnement (18) avec émission d'au moins une partie de la puissance lumineuse prédéfinissable sous forme de lumière polarisée (12).

11. Système d'assistance au conducteur (2) selon la revendication 10,
**caractérisé par**
une unité d'évaluation (6) qui est conçue pour comparer les données d'image générées par l'unité de détection d'image (5) dans le premier mode de fonctionnement (17) et les données d'image générées par l'unité de détection d'image (5) dans le second mode de fonctionnement (18).

12. Système d'assistance au conducteur (2) selon l'une quelconque des revendications précédentes,
**caractérisé par**
un dispositif d'affichage (7) qui est conçu pour recevoir les données d'image générées par l'unité de détection d'image (5) et pour afficher une image de l'environnement (3) à partir des données d'image.

13. Véhicule automobile (1) muni d'un système d'assistance au conducteur (2) selon l'une quelconque des revendications précédentes.

14. Véhicule automobile (1) selon la revendication 13,
**caractérisé en ce que**
la première direction de polarisation et/ou la seconde direction de polarisation est orthogonale par rapport à une surface routière (13) sur laquelle le véhicule automobile (1) se trouve ou roule.

15. Procédé de fonctionnement d'un système d'assistance au conducteur (2) pour un véhicule automobile (1), consistant à :
- éclairer un environnement (3) du véhicule automobile (1) au moyen d'un phare de véhicule (4) comprenant une première source de lumière (8) conçue pour diffuser une lumière non polarisée (11), et comprenant une seconde source de lumière (9) conçue pour émettre une lumière polarisée de manière linéaire (12) ; et
- n'évaluer essentiellement que de la lumière présentant une première direction de polarisation prédéfinissable afin de générer des données d'image en fonction de l'environnement du véhicule automobile (1) à l'aide d'une unité de détection d'image (5) qui est synchronisée par l'intermédiaire d'une liaison de synchronisation (19) avec la première source de lumière (8) et la seconde source de lumière (9) grâce à un dispositif de commande (14) ;
dans lequel,
- pendant un fonctionnement nominal au cours duquel une puissance lumineuse prédéfinissable est fournie par le phare de véhicule (4) et qui comprend un premier mode de fonctionnement (17) et un second mode de fonctionnement (18),
- fournir de la lumière polarisée de manière linéaire (12) grâce à la seconde source de lumière (9) avec une seconde direction de polarisation pour éclairer l'environnement (3) pendant le second mode de fonctionnement (18) et
- fournir de la lumière non polarisée (11) par la première source de lumière (8) pendant le premier mode de fonctionnement (17) ;
- dans lequel la première source de lumière (8) et la seconde source de lumière (9) fonctionnent respectivement à tour de rôle à pleine puissance et sont éteintes de manière alternée, et cela est répété de manière cyclique, de sorte qu'un tracé périodique en résulte.
